(19)

**Europäisches Patentamt**
**European Patent Office**
**Office européen des brevets**

(11) **EP 3 954 744 B1**

(12) **EUROPEAN PATENT SPECIFICATION**

(45) Date of publication and mention
of the grant of the patent:
**06.03.2024 Bulletin 2024/10**

(21) Application number: **20191024.7**

(22) Date of filing: **14.08.2020**

(51) International Patent Classification (IPC):
**C09D 11/023** (2014.01)

(52) Cooperative Patent Classification (CPC):
**C09D 11/106; C09D 5/00; C09D 11/322;**
**C09D 17/001**

(54) **AQUEOUS PARTICLE DISPERSION AND PROCESS FOR FORMING AN AQUEOUS PARTICLE DISPERSION**

WÄSSRIGE PARTIKELDISPERSION UND VERFAHREN ZUR HERSTELLUNG EINER WÄSSRIGEN PARTIKELDISPERSION

DISPERSION AQUEUSE DE PARTICULES ET PROCÉDÉ DE FORMATION D'UNE DISPERSION AQUEUSE DE PARTICULES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**16.02.2022 Bulletin 2022/07**

(73) Proprietor: **Friedrich-Alexander-Universität**
**Erlangen-Nürnberg**
**91054 Erlangen (DE)**

(72) Inventors:
• **REY, Marcel**
**91068 Münchaurach (DE)**
• **VOGEL, Nicolas**
**91052 Erlangen (DE)**
• **NAIR, Sharanya**
**91058 Erlangen (DE)**

(74) Representative: **Aera A/S**
**Niels Hemmingsens Gade 10, 5th Floor**
**1153 Copenhagen K (DK)**

(56) References cited:
**DE-A1- 2 002 999     US-A1- 2013 307 899**

• **PERTOFT H ET AL: "Density gradients prepared from colloidal silica particles coated by polyvinylpyrrolidone (Percoll)", ANALYTICAL BIOCHEMISTRY, ACADEMIC PRESS, AMSTERDAM, NL, vol. 88, no. 1, 15 July 1978 (1978-07-15), pages 271-282, XP024822292, ISSN: 0003-2697, DOI: 10.1016/0003-2697(78)90419-0 [retrieved on 1978-07-15]**
• **CHANGDEOK SEO ET AL: "Altering the coffee-ring effect by adding a surfactant-like viscous polymer solution", SCIENTIFIC REPORTS, vol. 7, no. 1, 29 March 2017 (2017-03-29), XP055602797, DOI: 10.1038/s41598-017-00497-x**

**Description**

The present invention relates to an aqueous particle dispersion exhibiting a homogenous drying pattern and a process for forming said aqueous particle dispersion. Furthermore, the invention relates to a homogenous particle film comprising modified particles and a process for forming a homogenous particle film from droplets of said aqueous particle dispersion. Finally, the invention also relates to the use of said aqueous particle dispersion for suppressing the coffee ring effect during the drying process of droplets of said aqueous particle dispersion.

*Background*

After spilling coffee, one will observe the characteristic circular stains left by the drying droplets. This universal phenomenon, known as the "coffee ring effect", is observed for a variety of suspended materials. It can be explained by the pinning of the drying suspension droplet to the substrate, followed by the preferential evaporation of water around the drop edge. This liquid is replenished from the center of the droplet, inducing a capillary flow towards the drying edge. The suspended material is thus carried towards the drop edge forming the characteristic ring pattern (Deegan, R. D. etal.; Nature, 389, 827-829 (1997)). The importance of achieving uniform drying patterns has led to different strategies to suppress the coffee ring effect. The capillary flow can be reduced by an increase in viscosity due to the addition of soluble polymers (Seo, C. etal.; Sci. Rep. 7, 1-9 (2017)) or by invoking Maragoni flows (Hu, H. et al.; J. Phys. Chem. B, 110, 7090-7094 (2006)) to at least partially counteract the capillary flow. Tuning the particle-particle and particle-interface interactions can cause aggregation and therefore enhanced sedimentation of the dispersed material, or electrostatic adsorption to the substrate (Anyfantakis, M. et al.; Langmuir 31, 4113-4120 (2015)). Finally, the shape of the particles itself has been shown to affect the coffee ring formation, with ellipsoidal particles causing a uniform drying behavior (Yunker, P. J. et al.; Nature 476, 308-311 (2011)). Common to all these approaches is the necessity to precisely tailor the system, requiring customized substrates, surfactants, or particles.

The described coffee ring effect causes problems for a number of technological applications, such as coating techniques or inkjet printing (Park, J. et al.; Langmuir 22, 3506-3513 (2006)), where a uniform deposition is desired. Thus, the object of the present invention is to provide a versatile strategy to overcome the coffee ring effect for aqueous dispersions of different particle materials. In particular, it is an object of the present invention to provide materials and processes suitable to overcome the coffee ring effect. Pertoft et al., 1978, Analytical Biochemistry, 88:271 discloses polyvinylpyrrolidone coated silica particles.

*Summary of the Invention*

The present invention is based on the finding that the above-mentioned objectives can be achieved by an aqueous particle dispersion exhibiting a homogenous drying pattern and comprising from 0.0001 to 5.0 wt.% of modified particles and water,

wherein the modified particles comprise, or consist of, a solid core particle and a polymeric shell, wherein the polymeric shell comprises, or consists of, a monolayer of a water-soluble interfacially-active polymer having a molecular weight of more than 10 kDa, which is adsorbed to the solid core particle;
wherein the surface tension of the dispersion is in a range of from 60 to 72 mN/m, preferably from 65 to 72 mN/m and more preferably from 67 to 72 mN/m.

Functionalizing the surface of suspended particles with interfacially-active polymers gives rise to aqueous particle dispersions, which show a homogenous drying pattern and, thus, overcome the coffee ring effect. We further show that the method is independent of the particle shape and applicable to a variety of commercial particles.

Another aspect of the invention is the provision of a process for producing an aqueous particle dispersion comprising the steps of:

a) providing a dispersion consisting of water and solid particles,

b) providing an aqueous solution of a water-soluble, interfacially-active polymer having a molecular weight of more than 10 kDa,

c) mixing said aqueous dispersion of solid particles with said aqueous polymer solution,

d) removing free polymer from the obtained mixture;

wherein, in step c), the amount of the water-soluble, interfacially-active polymer mixed with said aqueous dispersion of solid core particles exceeds the amount of polymer required to coat the surface of each of the solid core particles with a monolayer of the polymer, and

wherein step d) is repeated until the surface tension of the resulting modified particle dispersion is in a range of from 60 to 72 mN/m, preferably from 65 to 72 mN/m and more preferably from 67 to 72 mN/m.

In a further aspect, the invention relates to a homogenous particle film comprising, or consisting of, modified particles comprising a solid core particle and an outer polymer shell, wherein the polymer shell comprises, or consists of, a water-soluble, interfacially-active polymer having a molecular weight of more than 10 kDa, wherein the average coverage of the substrate surface with particles is essentially uniform over the entire particle film.

In yet another aspect, the invention is directed to a process for forming a homogenous particle film from droplets of an aqueous particle dispersion as described above, the process comprising:

- providing an aqueous particle dispersion,

- forming droplets of the aqueous particle dispersion,

- contacting the droplets with a surface,

- allowing the droplets to dry on said surface;

wherein the concentration of modified particles in the dispersion is from 0.0001 to 5 wt.%, preferably from 0.0005 to 2.5 wt.%, more preferably from 0.001 to 1.0 wt.% based on the total weight of the aqueous particle dispersion.

Moreover, in a final aspect, the invention relates to the use of an aqueous particle dispersion as described above for suppressing the coffee ring effect that is convective transport of particles to the edge, during the drying process of droplets of said aqueous particle dispersion.

*Brief description of the Figures*

Figure 1 is a schematic illustration of the process for producing an aqueous particle dispersion.

Figure 2 depicts optical microscopy images of dried aqueous dispersions according to the invention (top), as well as cross-sectional grey value distribution in the obtained particle films/ aqueous dispersions after drying (bottom).

Figure 3 shows the effect on drying uniformity observed upon removing residual "free" interfacially-active polymer from the aqueous particle dispersion.

Figure 4 evaluates the influence of particle shape on the drying pattern.

Figure 5 evaluates the influence of varying the material for the core particles on the drying pattern.

Figure 6 evaluates the influence of varying the type of interfacially-active polymer on the drying pattern.

Figure 7 evaluates the influence of molecular weighty chain length of the interfacially-active polymer on the drying pattern.

Figure 8 evaluates the influence of interfacially-active grafted polymer chains.

*Detailed description of the Invention*

In the following, the individual components and process steps are defined in more detail. Furthermore, the following terms and expressions are used throughout the description according to the definitions provided below, unless otherwise indicated.

Definitions

As already pointed out above, the "*coffee ring effect*" is the convective transport of particles to the droplet edge during the drying process of droplets of an aqueous particle dispersion.

The "*molecular weight*" of polymers indicates the weight average molecular weight of a polymer as determined by gel permeation chromatography (GPC).

In the context of particles, the expression "*particle size*" refers to the average particle diameter as determined by dynamic light scattering.

The expression "*surface tension of aqueous dispersions and/ or solutions*" relates to numerical values of the surface tension as determined using the pendant drop method measured at 25 °C.

The term "*adsorbed*" indicates that a polymer (or any other chemical substance) is linked to a particle and/ or surface via any type of physical and/ or chemical interaction. Such interactions include, for example, Van-der-Waals forces, hydrogen bonding, hydrophobic interactions, or covalent or ionic chemical bonds.

In the context of the current application, the expression "*substantially free of*" indicates that the component in question is only contained in unavoidable trace amounts. Unavoidable trace amounts may occur, for example, where equilibrium states are concerned.

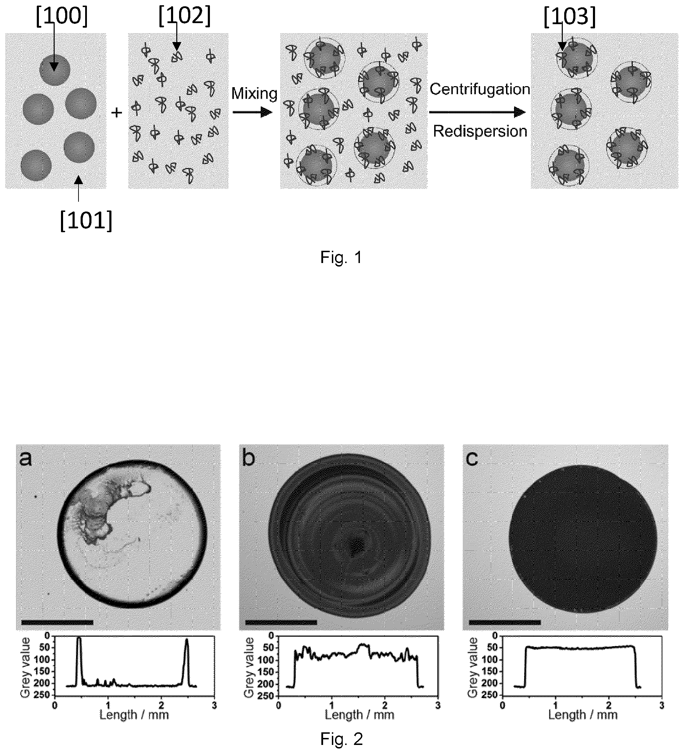

The expression "*homogenous film*" relates to a film, wherein the average coverage of the surface of a substrate is essentially uniform over the entire film. Uniformity of the average surface coverage is determined via grey scale measurements on photographs of the dried droplets (see also Fig. 2). The grey scale distribution was obtained by plotting the grey values of a cross-sectional line across the droplet using the software imageJ.

The term "*water-soluble polymers*" describes polymeric substances that dissolve, disperse, or swell in water.

The term "*interfacially-active*" describes the ability of a substance to adsorb or / and interact with solid and liquid interfaces and modify their physical properties.

The term "*interfacially-active water-soluble polymer*" describes a water-soluble polymer that reduces the surface tension of water when dissolved in water. This decrease in surface tension can be measured with the pendant drop method.

The aqueous particle dispersion of the invention comprises modified particles, wherein the modified particles comprise a solid core particle and a polymeric shell.

Solid core particle

Since it is an object of the present invention to provide a universal strategy for avoiding the coffee stain effect, there are no specific limitations as regards the materials from which said solid core particles are made.

Possible materials for the solid core particle are organic materials, carbonaceous materials, and inorganic materials.

Specific examples of organic materials include thermoplastic polymer particles, such as (meth)acrylic polymers, polyolefins, polystyrene, polyvinyl chloride, polyvinylidene fluoride, polycarbonate, polytetrafluoroethylene and duroplastic polymer particles, such as polyesters, polyurethanes, polyimides, epoxy resins, melamine resins. Moreover, suitable organic materials may include organic pigments.

Preferably, organic materials are selected from thermoplastic polymer particles or duroplastic polymer particles.

Specific examples of carbonaceous materials include carbon black, graphite, carbon nanotubes and graphene.

Specific examples of inorganic materials include metals, semimetals, metal alloys, intermetallic components, metal oxides, semimetal oxides, transition metal oxides, non-metal oxides, mixed metal oxides, mixed semi metal oxides, metal sulphides, metal halides, metal oxide hydrates, metal phosphates, semimetal phosphate, metal chalcogenides, semimetal chalcogenides, metal nitrides, semimetal nitrides, silicates, aluminosilicates, metal carbides, perovskites, metal carbonates, zeolites, metal organic frameworks, particles formed from two dimensional, sheet-like structures, mica, glass, ceramic materials, calcium carbonate, hydroxyapatite, bioglass, bioactive glasses, bioactive ceramics and mixtures thereof.

More preferably, the material for the solid core particle is selected from polymer particles, carbon black particles, iron oxide particles, silica particles, titania particles; even more preferably, selected from polystyrene, silica, hematite, goethite and titanium dioxide.

Shape and size of the solid core particles are not particularly limited. However, upon selecting the size of the solid core particles, it is important to keep the intended use of the aqueous particle dispersions in mind and to select the particle size accordingly. If the particles become exceedingly large and, thus, too heavy, sedimentation will prevent the formation of a stable dispersion of particles in the aqueous phase and affect the drying behavior. Therefore, the solid core particles may have a size of 100 $\mu$m or less, preferably of 10 $\mu$m or less, more preferably 1.5 $\mu$m or less. In case of solid core particles have a particle size of 100 $\mu$m or more physical effects during drying are outweighed by the large mass of the particles. According to a preferred embodiment, the particle size of the solid core particles is at least 1 nm, preferably 5 nm, more preferably 10 nm, and even more preferably 100 nm.

The particle shape is of no importance for achieving the effect.

Polymeric shell

Generally, the polymeric shell comprises, or consists of, a monolayer of a water-soluble interfacially-active polymer having a molecular weight of more than 10 kDa, which is adsorbed to the solid core particle.

Specific examples of suitable water-soluble interfacially-active polymers include polyvinylpyrrolidone, polyvinyl alcohol 87% hydrolyzed, poly(N-isopropylacrylamide) and methyl cellulose. Preferably, the polymer is selected form polyvinylpyrrolidone, polyvinyl alcohol 87% hydrolyzed and poly(N-isopropylacrylamide). More preferably, the polymer is selected from polyvinylpyrrolidone and polyvinyl alcohol 87% hydrolyzed.

If the molecular weight of the polymer is less than 10 kDa, the resulting polymeric shell is not suitable to overcome the coffee ring effect. Preferably, the molecular weight of the water-soluble interfacially-active polymer is at least 55 kDa, more preferably at least 130 kDa and still more preferably at least 360 kDa.

Aqueous particle dispersion

An aqueous particle dispersion according to the present invention and exhibiting a homogenous drying pattern comprises, or consists of, from 0.0001 to 5.0 wt.% of modified particles comprising a solid core particle, a polymeric shell (as described above in detail) and water,
wherein the surface tension of the dispersion is in a range of from 60 to 72 mN/m, preferably from 65 to 72 mN/m and more preferably from 67 to 72 mN/m.

If the concentration of the modified particles is below 0.0001 wt.%, no homogenous film can be obtained since the particle density in a droplet of the aqueous particle dispersion is so low that insufficient particles are available to fully and homogenously coat the area of the droplet. On the other hand, if the concentration of the modified particles exceeds 5.0 wt.%, a homogenous film cannot be obtained because the particle density in a droplet of the aqueous particle dispersion is so high that the particles start to - partially - form multiple layers of particles on top of one another during drying. Preferably, the modified particles are present in an amount of from 0.0005 to 2.5 wt.%, more preferably from 0.001 to 1.0 wt.% and most preferably from 0.01 to 0.5 wt.% based on the total weight of the aqueous particle dispersion.

The aqueous particle dispersion of the current invention has a surface tension in the range of from 60 to 72 mN/m, preferably from 65 to 72 mN/m and more preferably from 67 to 72 mN/m. A surface tension of less than 60 mN/m indicates the presence of significant amounts of dissolved interfacially-active polymers/ additives in the aqueous particle dispersion, which is not in accordance with the present invention. However, if the surface tension is within the indicated ranges, the dispersion only contains a limited amount of water-soluble interfacially-active polymer. For a surface tension from 65 to 72 mN/m the dispersion is substantially free of any water-soluble polymer that is not physisorbed to the solid core particle. Here, the expression "*substantially free*" indicates that the dispersion does not contain any significant amount of water-soluble polymer other than the water-soluble interfacially-active polymer constituting the polymeric shell of the modified particles. Nevertheless, especially in case of physical adsorption, unavoidable small amounts of said water-soluble interfacially-active polymer constituting the polymeric shell may be present due to the equilibrium state. Conventional aqueous particle dispersions tend to include additives, such as dispersing agents and/ or surfactants. Dispersing agents, which help to increase dispersion stability in (aqueous) particle dispersions, interact simultaneously with the particles and the surrounding solvent, e.g. water. Surfactants are usually added to aqueous particle dispersions and/ or aqueous solutions in order to adapt, more particularly reduce, the surface tension thereof. This is especially important in inkjet printing applications. Both dispersing agents and surfactants are commercially available in vast varieties and may comprise polymeric substances. Some dispersing agents act as surfactants and vice-versa. Contrary to conventional aqueous particle dispersions, the aqueous particle dispersions in accordance with the current invention do not comprise any further water-soluble interfacially-active additives, such as dispersing agents and/ or (polymeric) surfactants. Preferably, the aqueous particle dispersions of the current invention do not comprise any further additives.

It has been found that the above-described aqueous particle dispersions are obtainable by a specific process, said process being described in the following.

Process for producing an aqueous particle dispersion

A process for producing an aqueous particle dispersion comprises, or consists of, the steps of:

a) providing a dispersion consisting of water and solid core particles,

b) providing an aqueous solution of a water-soluble, interfacially-active polymer having a molecular weight of more than 10 kDa,

c) mixing said aqueous dispersion of solid particles with said aqueous polymer solution,

d) removing free polymer from the obtained mixture;

wherein, in step c), the amount of the water-soluble, interfacially-active polymer mixed with said aqueous dispersion of solid core particles exceeds the amount of polymer required to coat the surface of each of the solid core particles with a monolayer of the polymer, and

wherein step d) is repeated until the surface tension of the resulting modified particle dispersion is in a range of from 60 to 72 mN/m, preferably from 65 to 72 mN/m and more preferably from 67 to 72 mN/m.Generally, the amount of solid core particles in the dispersion of step a) is such that the final modified aqueous particle dispersion has a modified particle concentration in a range of from 0.0001 to 5.0 wt.%, preferably from 0.0005 to 2.5 wt.%, more preferably from 0.001 to 1.0 wt.% and most preferably from 0.01 to 0.5 wt.% based on the total weight of the modified aqueous particle dispersion.

According to a preferred embodiment of the invention, in step c), the amount of the polymer added exceeds by a factor of two, preferably by a factor of 5, more preferably by a factor of 10, most preferably by a factor of 20, the amount of polymer required to coat the surface of each of the solid core particles with a monolayer of the polymer.

The amount of polymer required to coat the surface of each of the solid core particles with a monolayer of the polymer may be determined as follows:

The total surface area of the solid core particle in the dispersion is calculated from the particle diameter as measured via dynamic light scattering, the particle density as known from literature, and the particle concentration. From the particle concentration and the density, the total volume of dispersed particles can be calculated. Using the diameter measured from dynamic light scattering, the number of particles in the dispersion is obtained, which allows calculation of the total surface area. The mass of water-soluble interfacially-active polymers that adsorb onto certain surface area are either available from literature sources or can be determined by someone skilled in the art using the following method. A particle dispersion with a known size is mixed with a polymer solution of known concentration and molecular weight and kept under constant stirring for one day. Then the particles, including the polymer adsorbed onto the particles, are removed by centrifugation. The change in polymer concentration in the supernatant can be determined for example by UV-Vis spectroscopy. The difference compared to the original polymer solution yields the total amount of adsorbed polymer onto the particle surface. The mass of adsorbed polymer per particle surface area can be obtained by dividing the adsorbed polymer mass by the total available surface area. Using this method, for example, Chibowski found an adsorption between 2.76 $mg/m^2$ and 4.23 $mg/m^2$ for PVA with molecular weight ranging from 36 to 130 kDa onto PS particles (Chibowski, S.; J. Colloid Interface Sci. 134, 174-180 (1990)). The amount of the water-soluble interfacially-active polymer needed to cover the surface of the solid particles with a monolayer is then calculated as:

Total surface area of the solid core particle in the dispersion [$m^2$] * mass of adsorbed polymer per surface area [$mg/m^2$].

Free polymer may be removed from the obtained mixture by various methods including, for example, centrifugation and dialysis, preferably centrifugation.

Solid core particles and water-soluble interfacially-active polymers are selected as outlined above in the context of the aqueous particle dispersion.

Fig. 1 provides a schematic illustration of the above described process for producing an aqueous particle dispersion. Specifically, the particle surface of a solid core particle is modified using interfacially-active polymers: an aqueous particle dispersion ([100]: particles, [101]: water) is mixed with an aqueous interfacially-active polymer solution ([102]: interfacially-active polymer). The polymer adsorbs onto the particles. Centrifugation and redispersion removes excess, non-adsorbed polymer. The modified dispersion is comprised, or consists, of water and particles with an interfacially-active polymeric shell ([103]) and is preferably essentially free of any non-adsorbed polymer.

Process for forming homogenous particle films

In addition to the above, it has been found that homogenous particle films can be obtained from droplets of an aqueous particle dispersion via the following process, comprising:

- providing a aqueous particle dispersion,

- forming droplets of the aqueous particle dispersion,

- contacting the droplets with a surface,

- allowing the droplets to dry on said surface;

wherein the concentration of modified particles in the dispersion is in a range of from 0.0001 to 5 wt.%, preferably from 0.0005 to 2.5 wt.%, more preferably from 0.001 to 1.0 wt.% based on the total weight of the aqueous particle dispersion.

Most preferably, the concentration of modified particles in the dispersion is from 0.01 to 0.5 wt.% based on the total weight of the aqueous particle dispersion.

There is an optimum in particle concentration in order to obtain a complete and homogenous particle film. Preferably, the particle concentration is chosen such that the total cross-sectional area of the particles, including the polymeric shell, is equal to the droplet surface area, which can be calculated by someone skilled in the art. The optimal particle concentration thus depends on the particle diameter, particle density, chain length of the polymeric additive, contact angle of the particle at the liquid interface, volume of the droplet and the contact angle of the droplet on the solid substrate. Depending on these different parameters, the optimum concentration to reach a homogeneous coating varies and concentration ranges as specified above can result. In the experimental part below, an exemplaric calculation of the optimum concentration of particles in a dispersion is provided for polystyrene particles with a diameter of 324 nm.

If the concentration of the modified particles is much below the optimum concentration as specified above, no homogenous film can be obtained since the particle number in a droplet of the aqueous particle dispersion is so low that an insufficient amount of particles is available to fully cover the droplet area. On the other hand, if the concentration of the modified particles is much above the optimum concentration, a homogenous film cannot be obtained because the particle density in a droplet of the aqueous particle dispersion is so high that the particles start to form multiple layers of particles on top of one another at the droplet edge during drying.

Droplets of the aqueous particle dispersion may be formed by any method and using any type of equipment. Preferred means for forming droplets include inkjet printing, drop casting, spray drying, electrospraying, spin coating, dip coating, more preferable means are inkjet printing and dropcasting.

Homogenous particle film

Homogenous particle films comprising, or consisting of, modified particles comprising a solid core particle and an outer polymer shell, wherein the polymer shell comprises, or consists of, a water-soluble interfacially-active polymer having a molecular weight of more than 10 kDa are characterized in that an average coverage of the substrate surface with particles is essentially uniform over the entire film.

Uniformity of the surface coverage is determined via grey scale measurements of optical microscopy images. Hereby the grey values of a line through the droplet are extracted using the software ImageJ.

Overall, it has been found that modified aqueous particle dispersions according to the current invention can be used for suppressing the coffee ring effect during the drying process of droplets of such aqueous particle dispersion. In other words, during drying of modified aqueous particle dispersions according to the invention convective transport of the modified particles to the drop edge is avoided.

*Examples*

The following examples and comparative examples prove the underlying principles and effects of the present invention. The effects of the invention are furthermore illustrated by the Figures.

Materials:

All chemicals were obtained from commercial sources and used as received if not otherwise stated.

polyvinyl alcohol (PVA, 130 kDa, Mowiol 18-88, Sigma Aldrich),

iron sulfate ($Fe(II)SO_4$, 99 %, Carl Roth),

sodium hydroxide (NaOH, 98 %, Carl Roth),

sodium carbonate ($Na_2CO_3$, 99 %, Carl Roth),

polyvinylpyrrolidone (PVP, 360 kDa, 55 kDa, 10 kDa, Sigma Aldrich),

methyl cellulose (15 cp, Sigma Aldrich),

hematite particles (Bayferrox 130, Lanxess),

titanium dioxide (TiO$_2$, 99 %, VWR),

Double-filtered and deionized water (18.2 MΩ·cm, double reverse osmosis by Purelab Flex 2, ELGA Veolia) was used throughout this study.

Particle synthesis:

The polystyrene particles were synthesized by surfactant-free emulsion polymerization, as established in literature (Rao, J. P. et al.; Prog. Polym. Sci. 36, 887-913 (2011)). The size of the PS particles was determined by dynamic light scattering to 324.4 ± 6.4 nm.

Ellipsoidal PS particles were produced according to an established protocol (Ho, C. C. et al.; Colloid Polym. Sci. 271, 469-479 (1993)). The arithmetic mean diameters of resulting ellipsoidal particles were characterized by measuring 100 particles from scanning electron microscopy (SEM) images: 1050 ± 59 nm x 194 ± 8 nm, aspect ratio (AR) = 5.4 ± 0.4.

The silica particles with an arithmetic mean diameter of 294 nm ± 9 nm were synthesized via the Stöber process (Stöber, W. et al.; J. Colloid Interface Sci. 26, 62-69 (1968)). Linear poly(N-isopropylacrylamide) (PNIPAM) was grafted from the functionalized silica particles in a surfactant-free precipitation polymerization (Park, J. H. et al.; Macromol. Chem. Phys. 208, 2419-2427 (2007)).

The goethite ellipsoidal nanoparticles were synthesized according to customized synthesis route. In a 500 mL three-necked round bottom flask 250 mL ultrapure water was degassed with 300 mL/min nitrogen for 20 min and heated to 38°C under continuous stirring. 15.96 g Solid Fe(II)SO$_4$ was dissolved in water after the degassing step. Then, in 50 mL degassed aqueous NaOH solution (0.21 M NaOH), 7.42 g Na$_2$CO$_3$ was dissolved and added to the Fe(II)SO$_4$ solution under continuous stirring, inducing the precipitation of a white solid of hexagonal-shaped Fe(OH)$_2$ nanoplatelets. The Fe(OH)$_2$ suspension was oxidized by pressurized air with a flowrate of 100 mL/min to form FeOOH. After 3 hours, the reaction was stopped and the goethite particles were cleaned by 3 times centrifugation and redispersion in water.

Surface-functionalization of the particles with polymers:

Solid core particles were dispersed in water at a concentration of 3.2 wt.%, mixed with an aqueous solution of a water-soluble interfacially-active polymer (5.0 wt.%) and kept under constant stirring for at least 1 hour. The weight ratio of water-soluble interfacially-active polymer to solid core particles in the mixture was adjusted to 1. Typically, the mixed dispersion was diluted with water and centrifuged at 11'000 rpm for 20 min. The supernatant was discarded and the particles were redispersed in water. The centrifugation and redispersion was, optionally, repeated several times.

Surface-functionalization of PS particles was tested with various polymer types, including polyvinylpyrrolidone, polyvinyl alcohol (87 % hydrolyzed) and methyl cellulose.

Inorganic particles including goethite (yellow pigment), hematite (red pigment) and titanium dioxide (white pigment) were functionalized with a PVA shell following the same protocol. In all cases, a homogeneous drying pattern was observed.

Details regarding the experimental parameters for inventive and comparative examples are provided in table 1.

Determination of polymer molecular weight

Unless otherwise indicated, the weight average molecular weight, $M_w$, of the polymers used in the examples, may be determined by gel permeation chromatography. Generally, $M_w$ of the polymers as given herein corresponds to the specifications provided by the manufacturer.

Determination of the particle size

"Particle size" as used herein relates to the arithmetic mean particle diameter determined via dynamic light scattering (DLS). Specifically, DLS measurements were performed on a Malvern Zetasizer Nano-ZS.

Calculation of optimum particle concentration:

A dispersion droplet with a volume $V_D = 0.85$ μL was evaporated on a silicon wafer with a contact angle θ

measured as $\theta=34°$. The volume of the segment is described by equation 1,

$$V_D = \pi/3 \cdot r_D{}^3 (1-\cos(\theta))^2 (2+\cos(\theta)) \qquad (1)$$

Where $r_D$ is the radius of the droplet.

With the known volume of the droplet, the radius of the droplet $r_D$ can be calculated by rearranging (1) to (2), neglecting the effects of gravity on the droplet shape.

$$r_D = ((3\ V_D\ /\ \pi)/((1-\cos(\theta))^2 (2+\cos(\theta))))^{1/3} \qquad (2)$$

The air/water surface of the droplet $M_D$, excluding the solid/water surface, is calculated using equation (3).

$$M_D = 2\pi r^2 (1-\cos(\theta)) \qquad (3)$$

The cross-section of the colloidal particles $A_P$ assuming a contact angle of 90° was calculated using equation (4).

$$A_P = (d_P/2)^2\ \pi \qquad (4)$$

Where dp is the diameter of the colloidal particles, measured as 324 nm. The number of colloidal particles $N_p$ fitting on the droplet surface can be calculated using equation (5).

$$N_P = M_D\ /\ A_P \cdot 0.9 \qquad (5)$$

Where the factor 0.9 describes the maximum packing of spheres in a plane. The total mass of the particles $m_P$ is calculated using equation (6).

$$m_P = N_P\ 4/3\ \pi\ (d_P/2)^3\ \rho_P \qquad (6)$$

where $\rho_P$ is the density of the colloidal particles. For polystyrene colloids the density is $\rho_P = 1.05$ g cm$^{-3}$. The concentration c needed for a dense packing is on the droplet surface is described in equation (7).

$$c = m_P\ /\ V \cdot 100 \qquad (7)$$

A theoretical concentration of 0.12 wt.% colloids is required to obtain a dense packing. The calculation ignores the space occupied by the polymeric chains on the particle surface. The increase in diameter for modified particles with a polymeric shell can be estimated from the interparticle distance distribution extracted from optical microscopy images. Depending on the type of water-soluble interfacially-active polymer used, the physisorption of polymer chains increased the diameter of the particles at the interface by 230 to 460 nm. Using the diameter of the polymer-modified particles, a preferred concentration for the exemplary particle / polymer system between 0.02 wt.% and 0.05 wt.% is calculated.

Similarly, the particle density affects the optimal concentration. For example, for gold particles with a density of 19.3 g/cm$^3$, a core particle diameter of 324 nm and a similar increase of the diameter of the modified particles at the interface by the physisorbed polymer by 230 to 460 nm, an ideal concentration between 0.37 wt.% and 0.74 wt.% is obtained according to the above calculations.

Similarly, the size of the particle affects the optimal concentration. For larger PS particles with a diameter of 24 $\mu$m and a similar increase of the diameter of the modified particles at the interface by the physisorbed polymer by 230-460 nm, the optimal concentration can be calculated between 4.79 wt.% and 4.94 wt.% according to the calculations above.

Dispersion and solution characterization/ surface tension:

Pendant drop measurements were performed with a drop shape analyzer (DSA100, Krüss). The surface tension of the dispersions/solutions was measured via the pendant drop method by depositing 8 $\mu$L droplets in air from a 0.5 mm syringe needle. During the drying, a video was recorded for ca. 50 min with a frame rate of 0.093 fpm. The surface tension was determined for each frame using the software provided by the instrument. The surface tension was determined after equilibration to a constant value - typically after an equilibration time of 20 min. All measurements were performed at ambient temperature (25°C).

Following the above measurement routine, a surface tension of 72.0 mN/m was measured for pure water. Likewise, for an aqueous solution of PVA (87% hydrolyzed) with a concentration of 5.0 wt.% a surface tension of 48.5 mN/m was obtained.

Characterization of the drying behavior:

To characterize the drying behavior of the particle dispersions drops of each dispersion, having a drop volume of 0.85 ml, were deposited on a silicon wafer (LG Siltron Inc. Korea), previously cleaned by sonication in isopropanol, ethanol and water for 5 min. The drying behavior at ambient temperature (20°C) was characterized by optical microscopy (Zeiss), using a 2.5x objective.

Samples exhibiting a homogenous drying pattern were denoted as "H", whereas samples exhibiting an inhomogeneous drying pattern were denoted as "I".

Fig. 2: Top: Optical microscopy images of dried PS particle films according to CE 1 (a), CE 2 (b) and IE 2 (c), respectively. Scale bar: 1 mm. Bottom: Cross-sectional grey value distribution after drying. A clear increase in homogeneity is observed upon removal of non-adsorbed PVA (c). Scale bar: 1 mm.

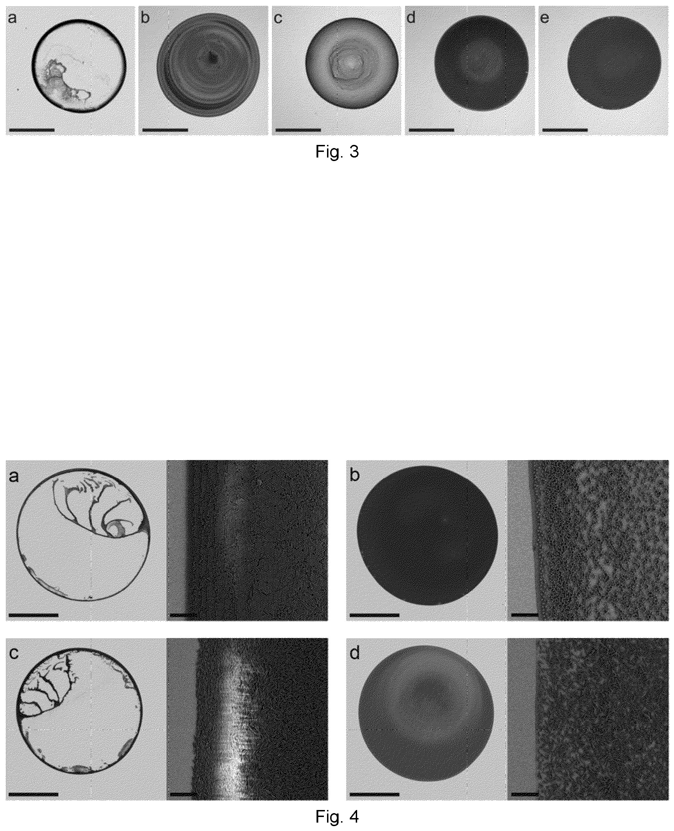

Fig 3: Prevention of the coffee ring effect of a PS particle dispersion by adding PVA and subsequent removal of free PVA by centrifugation and redispersion in water. a) Reference particle dispersion in pure water (CE 1); Addition of PVA (PS/PVA wt-% ratio: 1:1) without centrifugation and redispersion (b; CE 2), as well as one time (c; CE 3), two times (d; IE 1) and three times (e; IE 2) centrifugation and redispersion. Scale bar: 1 mm.

Fig. 4: Drying pattern of aqueous dispersions containing spherical (a (CE 1), b (IE 2)) and ellipsoidal PS particles (c (CE 5), d (IE 3)). Both pure particle dispersions (a,c) show a coffee ring pattern after drying. When the particle surface is modified with PVA as described in this invention, both particles, independent of their shape, show a uniform drying behavior (b,d). In contrast to the state of the art, where a uniform drying behavior was attributed to the elliptical shape of the particles (Yunker, P. J. et al.; Nature 476, 308-311 (2011).), these results demonstrate that the improvements in the drying behavior upon physisorption of PVA is independent of the particle shape. Left images) Optical microscopy images, scale bar: 1 mm. right images) Scanning electron microscopy images of the drop edge, scale bar: 5 $\mu$m.

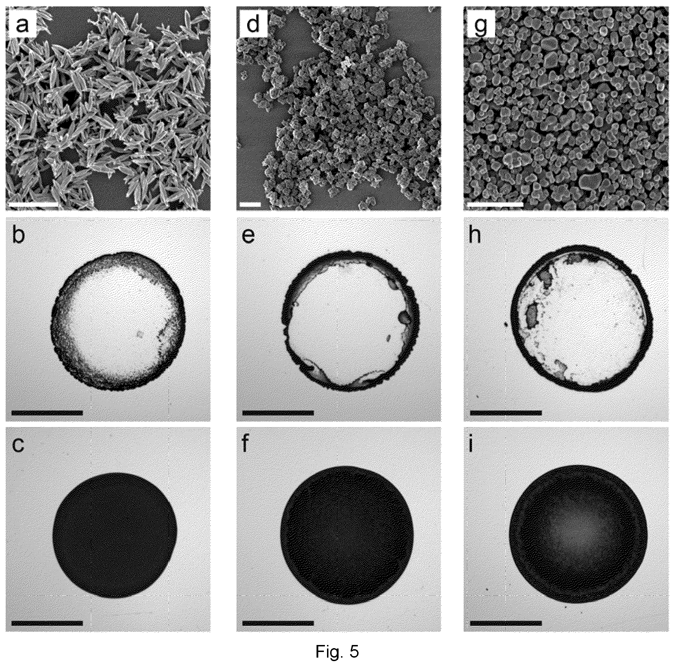

Fig. 5: Prevention of the coffee ring effect using modified dispersions with different core particle materials; a) SEM image of goethite particles as used in the examples; b) optical microscopy image of a dried dispersion comprising said goethite particles in accordance with CE 6; c) optical microscopy image of a dried dispersion comprising PVA-modified goethite particles in accordance with IE 6; d) SEM image of hematite particles as used in the examples; e) optical microscopy image of a dried dispersion comprising said hematite particles in accordance with CE 8; f) optical microscopy image of a dried dispersion comprising PVA-modified hematite particles in accordance with IE 9; g) SEM image of TiO$_2$ particles as used in the examples; b) optical microscopy image of a dried dispersion comprising said TiO$_2$ particles in accordance with CE 10; c) optical microscopy image of a dried dispersion comprising PVA-modified TiO$_2$ particles in accordance with IE 12. SEM images: Scale bar: 1 $\mu$m; Optical microscopy images: Scale bar: 1mm.

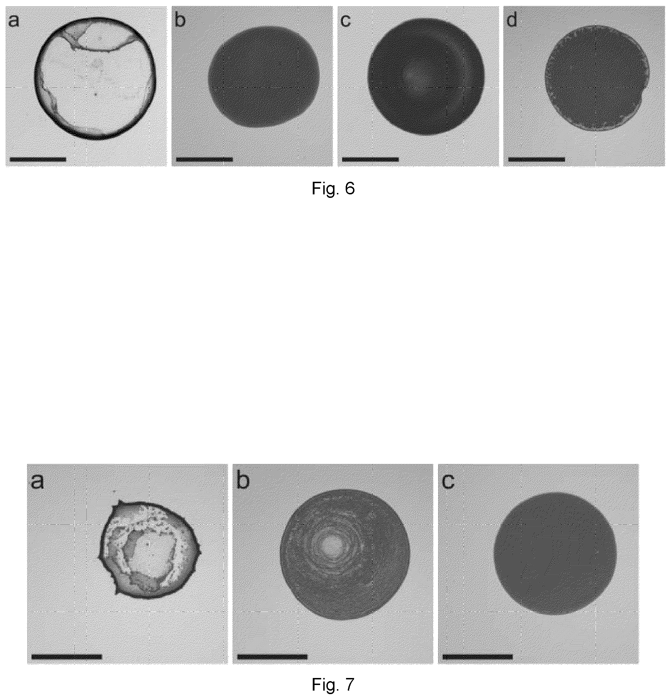

Fig. 6: Effect of different water-soluble interfacially-active polymeric additives on the drying behavior of colloidal suspensions leading to a homogenous drying (b-d). Prior to the deposition the particle/polymer suspension was cleaned 3 times by centrifugation and redispersion. a) Reference (CE 1), b) PVP modified particle dispersion (IE 14), c) PVA, 87 % hydrolysed, modified particle dispersion (IE 1) and d) methyl cellulose modified particle dispersion (IE 15). Scale bar: 1 mm.

Fig. 7: Effect of poly(vinyl pyrrolidone) chain length that is physisorbed to the PS particles, on the drying behaviour of the modified particle dispersion. a) 10 kDa (CE 4), b) 55 kDa (IE 13), c) 360 kDa (IE 14). With increasing chain length, the drying behaviour of the suspended particles is more homogenous. Scale bar: 1 mm.

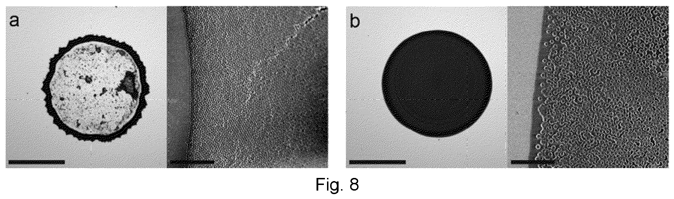

Fig. 8: Drying behaviour of a pure silica particle dispersion according to CE 12 (a) and a silica particle dispersion wherein the silica particles are surface-functionalized with grafted linear poly(N-isorpopylacrylamide) (PNIPAM) chains according to IE 16 (b). With the grafted PNIPAM polymer chains, a uniform drying behavior is achieved, while the reference with pure silica particle shows a coffee ring effect. Left) Optical microscopy images, scale bar: 1 mm. Right) Scanning electron microscopy images of the drop edge, scale bar: 5 $\mu$m.

**Table 1**

| | Core particle<br>- material<br>- shape<br>- particle size | Water-soluble polymer<br>- material<br>- $M_W$ | Particle concentration in final dispersion | Centrifugation & redispersion | Surface tension [mN/m] | Drying pattern |
|---|---|---|---|---|---|---|
| IE 1 | Polystyrene; spherical; 324 nm | PVA, 87% hydr.; 130 kDa | 0.04 wt.% | 2x | 63.8 | H |
| IE 2 | Polystyrene; spherical; 324 nm | PVA, 87% hydr.; 130 kDa | 0.04 wt.% | 3x | 68.3 | H |
| IE 3 | Polystyrene; ellipsoidal; 1050 nm/ 194 nm | PVA, 87% hydr.; 130 kDa | 0.04 wt.% | 3x | N/A | H |
| IE 4 | Goethite; ellipsoidal; 289nm | PVA, 87% hydr.; 130 kDa | 0.14 wt.% | 1x | 60.2 | H |
| IE 5 | Goethite; ellipsoidal; 289nm | PVA, 87% hydr.; 130 kDa | 0.14 wt.% | 2x | 63.4 | H |
| IE 6 | Goethite; ellipsoidal; 28nm9 | PVA, 87% hydr.; 130 kDa | 0.14 wt.% | 3x | 68.6 | H |
| IE 7 | Hematite; other; 467nm | PVA, 87% hydr.; 130 kDa | 0.14 wt.% | 1x | 61.1 | H |
| IE 8 | Hematite; other; 467nm | PVA, 87% hydr.; 130 kDa | 0.14 wt.% | 2x | 65.5 | H |
| IE 9 | Hematite; other; 467nm | PVA, 87% hydr.; 130 kDa | 0.14 wt.% | 3x | 71.4 | H |
| IE 10 | TiO2; other; 304nm | PVA, 87% hydr.; 130 kDa | 0.14 wt.% | 1x | 64.5 | H |
| IE 11 | TiO2; other; 304nm | PVA, 87% hydr.; 130 kDa | 0.14 wt.% | 2x | 66.1 | H |
| IE 12 | TiO2; other; 304nm | PVA, 87% hydr.; 130 kDa | 0.14 wt.% | 3x | 69.9 | H |
| IE 13 | Polystyrene; spherical; 324 nm | PVP; 55 kDa | 0.04 wt.% | 3x | N/A | H |
| IE 14 | Polystyrene; spherical; 324 nm | PVP; 360 kDa | 0.04 wt.% | 3x | 68.8 | H |
| IE 15 | Polystyrene; spherical; 324 nm | Methyl cellulose; 15 cP | 0.04 wt.% | 3x | 71.5 | H |

(continued)

| | Core particle<br>- material<br>- shape<br>- particle size | Water-soluble polymer<br>- material<br>- $M_W$ | Particle concentration in final dispersion | Centrifugation & redispersion | Surface tension [mN/m] | Drying pattern |
|---|---|---|---|---|---|---|
| IE 16 | SiO2; spherical; 294 nm | PNIPAM, grafted; N/A | 0.04 wt.% | 3x | 71.2 | H |
| CE 1 | Polystyrene; spherical; 324 nm | None | 0.04 wt.% | - | 71.0 | I |
| CE 2 | Polystyrene; spherical; 324 nm | PVA, 87% hydr.; 130 kDa | 0.04 wt.% | - | 48.7 | I |
| CE 3 | Polystyrene; spherical; 324 nm | PVA, 87% hydr.; 130 kDa | 0.04 wt.% | 1x | 55.2 | I |
| CE 4 | Polystyrene; spherical; 324 nm | PVP; 10 kDa | 0.04 wt.% | 3x | N/A | I |
| CE 5 | Polystyrene; ellipsoidal; 1050 nm/ 194 nm | None | 0.04 wt.% | - | N/A | I |
| CE 6 | Goethite; ellipsoidal; 289nm | None | 0.14 wt.% | - | 71.8 | I |
| CE 7 | Goethite; ellipsoidal; 289nm | PVA, 87% hydr.; 130 kDa | 0.14 wt.% | - | 50.5 | I |
| CE 8 | Hematite; other; 467nm | None | 0.14 wt.% | - | 71.7 | I |
| CE 9 | Hematite; other; 467nm | PVA, 87% hydr.; 130 kDa | 0.14 wt.% | - | 48.3 | I |
| CE 10 | TiO2; other; 304nm | None | 0.14 wt.% | - | 71.0 | I |
| CE 11 | TiO2; other; 304nm | PVA, 87% hydr.; 130 kDa | 0.14 wt.% | - | 49.3 | I |
| CE 12 | SiO2; spherical; 294 nm | None | 0.04 wt.% | - | 71.9 | I |

From the data provided in table 1 above, as well as from Fig. 2 to Fig. 8, it is immediately evident that the coffee ring effect is effectively suppressed if the surface tension of aqueous particle dispersions comprising modified particles having a solid particle core and a water-soluble interfacially-active polymer shell is adjusted to a range of from at least 60.0 mN/m to 72.0 mN/m, preferably from 65 to 72 mN/m and more preferably from 67 to 72 mN/m.

**Claims**

1.   A process for producing an aqueous particle dispersion comprising the steps of:

   a) providing a dispersion consisting of water and solid core particles,
   b) providing an aqueous solution of a water-soluble, interfacially-active polymer having a molecular weight, determined by the method in the description, of more than 10 kDa

c) mixing said aqueous dispersion of solid core particles with said aqueous polymer solution,

d) removing free polymer from the obtained mixture;

wherein, in step c), the amount of the water-soluble, interfacially-active polymer mixed with said aqueous dispersion of solid core particles exceeds the amount of polymer required to coat the surface of each of the solid core particles with a monolayer of the polymer, and

wherein step d) is repeated until the surface tension, as determined by the method in the description, of the resulting modified particle dispersion is in a range of from 60 to 72 mN/m, preferably from 65 to 72 mN/m and more preferably from 67 to 72 mN/m.

2. The process according to claim 1, wherein, in step c), the amount of the polymer added exceeds by a factor of two, preferably by a factor of 5, more preferably by a factor of 10, most preferably by a factor of 20, the amount of the polymer required to coat the surface of each of the solid core particles with a monolayer of the polymer.

3. An aqueous particle dispersion exhibiting a homogenous drying pattern comprising from 0.0001 to 5.0 wt.% of modified particles and water,

wherein the modified particles comprise, or consist of, a solid core particle and a polymeric shell, wherein the polymeric shell comprises, or consists of, a monolayer of a water-soluble interfacially-active polymer having a molecular weight, as determined by the method in the description, of more than 10 kDa, which is adsorbed to the solid core particle;

wherein the surface tension, as determined by the method in the description, of the dispersion is in a range of from 60 to 72 mN/m, preferably from 65 to 72 mN/m and more preferably from 67 to 72 mN/m.

4. The aqueous particle dispersion according to claim 3, wherein the modified particles are present in an amount of from 0.0005 to 2.5 wt.%, preferably from 0.001 to 1.0 wt.%, more preferably 0.01 to 0.5 wt.% based on the total weight of the aqueous particle dispersion.

5. An aqueous particle dispersion exhibiting a homogenous drying pattern obtainable by the process of claims 1 or 2.

6. The aqueous particle dispersion according to any one of claims 3 to 5, wherein the polymeric shell consists of a monolayer of a water-soluble interfacially-active polymer having a molecular weight, as determined by the method in the description, of more than 10 kDa.

7. The aqueous particle dispersion according to any one of claims 3 to 6, wherein said water-soluble interfacially-active polymer has a molecular weight, as determined by the method in the description, of more than 55 kDa, preferably more than 130 kDa, more preferably more than 360 kDa.

8. The aqueous particle dispersion according to any one of claims 3 to 7, wherein said water-soluble interfacially-active polymer is selected from polyvinylpyrrolidone, polyvinyl alcohol 87% hydrolyzed and methyl cellulose, preferably, said polymer is selected from polyvinylpyrrolidone and polyvinyl alcohol 87% hydrolyzed.

9. The aqueous particle dispersion according to any one of claims 3 to 8, wherein said solid core particle comprises at least one of polystyrene, silica, hematite and goethite.

10. The aqueous particle dispersion according to claim 9, wherein the water-soluble interfacially-active polymer is either polyvinyl alcohol 87% hydrolyzed, or polyvinylpyrrolidone.

11. The aqueous particle dispersion according to claim 10, wherein the water-soluble interfacially-active polymer has a molecular weight, as determined by the method in the description, of 55 kDa or more.

12. A process for forming a homogenous particle film from droplets of an aqueous particle dispersion according to any one of claims 3 to 11, the process comprising:

- providing an aqueous particle dispersion,
- forming droplets of the aqueous particle dispersion,
- contacting the droplets with a surface,
- allowing the droplets to dry on said surface;

wherein the concentration of modified particles in the dispersion is from 0.0001 to 5 wt.%, preferably from 0.0005 to 2.5 wt.%, more preferably from 0.001 to 1.0 wt.% based on the total weight of the aqueous particle dispersion.

13. The process according to claim 12, wherein the concentration of modified particles in the dispersion is from 0.01 to 0.5 wt.%.

14. A homogenous particle film obtained from droplets of an aqueous particle dispersion according to claims 3 to 11 comprising, or consisting of, modified particles comprising a solid core particle and an outer polymer shell, wherein the polymer shell comprises, or consists of, a water-soluble, interfacially-active polymer having a molecular weight of more than 10 kDa, wherein the average coverage of the substrate surface with particles is essentially uniform over the entire particle film.

15. Use of an aqueous particle dispersion according to anyone of claims 3 to 11 for suppressing the coffee ring effect, that is convective transport of particles to the edge, during the drying process of droplets of said aqueous particle dispersion.

**Patentansprüche**

1. Verfahren zum Herstellen einer wässrigen Partikeldispersion, umfassend die Schritte:

   a) Bereitstellen einer Dispersion, bestehend aus Wasser und festen Kernpartikeln,
   b) Bereitstellen einer wässrigen Lösung eines wasserlöslichen, grenzflächenaktiven Polymers mit einem nach der in der Beschreibung angegebenen Methode bestimmten Molekulargewicht von mehr als 10 kDa,
   c) Mischen der wässrigen Dispersion fester Kernpartikel mit der wässrigen Polymerlösung,
   d) Entfernen von freiem Polymer aus der erhaltenen Mischung;
   wobei in Schritt c) die Menge des mit der wässrigen Dispersion fester Kernpartikel gemischten, wasserlöslichen, grenzflächenaktiven Polymers die Menge des Polymers übersteigt, die erforderlich ist, um die Oberfläche jedes der festen Kernpartikel mit einer Monoschicht des Polymers zu beschichten, und
   wobei Schritt d) wiederholt wird, bis die Oberflächenspannung der resultierenden modifizierten Partikeldispersion, wie sie durch die in der Beschreibung beschriebene Methode bestimmt wird, in einem Bereich von 60 bis 72 mN/m, bevorzugt von 65 bis 72 mN/m und besonders bevorzugt von 67 bis 72 mN/m liegt.

2. Verfahren nach Anspruch 1, wobei in Schritt c) die Menge des zugesetzten Polymers die Menge des zur Beschichtung der Oberfläche jedes der festen Kernpartikel mit einer Monoschicht des Polymers erforderlichen Polymers um den Faktor zwei, bevorzugt um den Faktor 5, besonders bevorzugt um den Faktor 10, ganz besonders bevorzugt um den Faktor 20 übersteigt.

3. Wässrige Partikeldispersion, die ein homogenes Trocknungsmuster aufweist, umfassend 0,0001 bis 5,0 Gew.-% modifizierte Partikel und Wasser,

   wobei die modifizierten Partikel ein festes Kernpartikel und eine polymere Hülle umfassen oder daraus bestehen, wobei die polymere Hülle eine Monoschicht aus einem wasserlöslichen grenzflächenaktiven Polymer mit einem wie durch die in der Beschreibung angegebene Methode bestimmten Molekulargewicht von mehr als 10 kDa umfasst oder daraus besteht, das an das feste Kernpartikel adsorbiert ist;
   wobei die Oberflächenspannung der resultierenden modifizierten Partikeldispersion, wie sie durch die in der Beschreibung beschriebene Methode bestimmt wird, in einem Bereich von 60 bis 72 mN/m, bevorzugt von 65 bis 72 mN/m und besonders bevorzugt von 67 bis 72 mN/m liegt.

4. Wässrige Partikeldispersion nach Anspruch 3, wobei die modifizierten Partikel in einer Menge von 0,0005 bis 2,5 Gew.-%, bevorzugt 0,001 bis 1,0 Gew.-%, besonders bevorzugt 0,01 bis 0,5 Gew.-% bezogen auf das Gesamtgewicht der wässrigen Partikeldispersion vorliegen.

5. Wässrige Partikeldispersion, die ein homogenes Trocknungsmuster aufweist, erhältlich nach dem Verfahren der Ansprüche 1 oder 2.

6. Wässrige Partikeldispersion nach einem der Ansprüche 3 bis 5, wobei die polymere Hülle aus einer Monoschicht aus einem wasserlöslichen grenzflächenaktiven Polymer mit einem wie durch die Methode in der Beschreibung bestimmten Molekulargewicht von mehr als 10 kDa besteht.

7. Wässrige Partikeldispersion nach einem der Ansprüche 3 bis 6, wobei das wasserlösliche grenzflächenaktive Polymer ein wie durch die Methode in der Beschreibung bestimmtes Molekulargewicht von mehr als 55 kDa, bevorzugt mehr als 130 kDa, besonders bevorzugt mehr als 360 kDa aufweist.

8. Wässrige Partikeldispersion nach einem der Ansprüche 3 bis 7, wobei das wasserlösliche grenzflächenaktive Polymer ausgewählt ist aus Polyvinylpyrrolidon, Polyvinylalkohol 87% hydrolysiert und Methylcellulose, wobei das Polymer vorzugsweise ausgewählt ist aus Polyvinylpyrrolidon und Polyvinylalkohol 87% hydrolysiert.

9. Wässrige Partikeldispersion nach einem der Ansprüche 3 bis 8, wobei das feste Kernpartikel mindestens eines von Polystyrol, Kieselsäure, Hämatit und Goethit umfasst.

10. Wässrige Partikeldispersion nach Anspruch 9, wobei das wasserlösliche grenzflächenaktive Polymer entweder hydrolysierter Polyvinylalkohol 87% oder Polyvinylpyrrolidon ist.

11. Wässrige Partikeldispersion nach Anspruch 10, wobei das wasserlösliche grenzflächenaktive Polymer ein nach der in der Beschreibung angegebenen Methode bestimmtes Molekulargewicht von 55 kDa oder mehr aufweist.

12. Verfahren zum Bilden eines homogenen Partikelfilms aus Tröpfchen einer wässrigen Partikeldispersion nach einem der Ansprüche 3 bis 11, wobei das Verfahren umfasst:

   - Bereitstellen einer wässrigen Partikeldispersion,
   - Bilden von Tröpfchen der wässrigen Partikeldispersion,
   - Kontaktieren der Tröpfchen mit einer Oberfläche,
   - Trocknenlassen der Tröpfchen auf der Oberfläche;

   wobei die Konzentration der modifizierten Partikel in der Dispersion 0,0001 bis 5 Gew.-%, bevorzugt 0,0005 bis 2,5 Gew.-%, besonders bevorzugt 0,001 bis 1,0 Gew.-% bezogen auf das Gesamtgewicht der wässrigen Partikeldispersion beträgt.

13. Verfahren nach Anspruch 12, wobei die Konzentration der modifizierten Partikel in der Dispersion 0,01 bis 0,5 Gew.-% beträgt.

14. Homogener Partikelfilm, erhalten aus Tröpfchen einer wässrigen Partikeldispersion nach den Ansprüchen 3 bis 11, umfassend oder bestehend aus modifizierten Partikeln, umfassend ein festes Kernpartikel und eine äußere Polymerhülle, wobei die Polymerhülle ein wasserlösliches, grenzflächenaktives Polymer mit einem Molekulargewicht von mehr als 10 kDa umfasst oder daraus besteht, wobei die mittlere Bedeckung der Substratoberfläche mit Partikeln über den gesamten Partikelfilm im Wesentlichen gleichmäßig ist.

15. Verwendung einer wässrigen Partikeldispersion nach einem der Ansprüche 3 bis 11 zum Unterdrücken des Kaffeering-Effekts, d. h. des konvektiven Transports von Partikeln zum Rand, während des Trocknungsprozesses von Tröpfchen der wässrigen Partikeldispersion.

**Revendications**

1. Procédé de préparation d'une dispersion aqueuse de particules comprenant les étapes :

   a) de fourniture d'une dispersion constituée d'eau et de particules à noyau solide,
   b) de fourniture d'une solution aqueuse d'un polymère hydrosoluble à activité interfaciale ayant un poids moléculaire, déterminé par le procédé de la description, supérieur à 10 kDa
   c) de mélange de ladite dispersion aqueuse de particules à noyau solide avec ladite solution aqueuse de polymère,
   d) d'élimination de polymère libre du mélange obtenu ;
   dans lequel, à l'étape c), la quantité du polymère hydrosoluble à activité interfaciale mélangée à ladite dispersion aqueuse de particules à noyau solide dépasse la quantité de polymère nécessaire pour revêtir la surface de chacune des particules à noyau solide d'une monocouche du polymère, et

dans lequel l'étape d) est répétée jusqu'à ce que la tension de surface, telle que déterminée par le procédé de la description, de la dispersion de particules modifiée résultante soit comprise dans une plage de 60 à 72 mN/m, de préférence de 65 à 72 mN/m et de manière davantage préférée de 67 à 72 mN/m.

2. Procédé selon la revendication 1, dans lequel, à l'étape c), la quantité du polymère ajoutée dépasse d'un facteur deux, de préférence d'un facteur 5, de manière davantage préférée d'un facteur 10, de manière préférée entre toutes d'un facteur 20, la quantité du polymère nécessaire pour revêtir la surface de chacune des particules à noyau solide d'une monocouche du polymère.

3. Dispersion aqueuse de particules présentant un motif de séchage homogène comprenant de 0,0001 à 5,0 % en poids de particules modifiées et d'eau,

dans laquelle les particules modifiées comprennent, ou consistent en, une particule à noyau solide et une enveloppe polymère, dans laquelle l'enveloppe polymère comprend, ou consiste en, une monocouche d'un polymère hydrosoluble à activité interfaciale ayant un poids moléculaire, tel que déterminé par le procédé de la description, supérieur à 10 kDa, qui est adsorbé sur la particule à noyau solide ;
dans laquelle la tension de surface, telle que déterminée par le procédé de la description, de la dispersion est comprise dans une plage de 60 à 72 mN/m, de préférence de 65 à 72 mN/m et de manière davantage préférée de 67 à 72 mN/m.

4. Dispersion aqueuse de particules selon la revendication 3, dans laquelle les particules modifiées sont présentes en une quantité comprise entre 0,0005 et 2,5 % en poids, de préférence entre 0,001 et 1,0 % en poids, de manière davantage préférée entre 0,01 et 0,5 % en poids par rapport au poids total de la dispersion aqueuse de particules.

5. Dispersion aqueuse de particules présentant un motif de séchage homogène susceptible d'être obtenu par le procédé selon les revendications 1 ou 2.

6. Dispersion aqueuse de particules selon l'une quelconque des revendications 3 à 5, dans laquelle l'enveloppe polymère est constituée d'une monocouche d'un polymère hydrosoluble à activité interfaciale, ayant un poids moléculaire, tel que déterminé par le procédé de la description, supérieur à 10 kDa.

7. Dispersion aqueuse de particules selon l'une quelconque des revendications 3 à 6, dans laquelle ledit polymère hydrosoluble à activité interfaciale a un poids moléculaire, tel que déterminé par le procédé de la description, supérieur à 55 kDa, de préférence supérieur à 130 kDa, de manière davantage préférée supérieur à 360 kDa.

8. Dispersion aqueuse de particules selon l'une quelconque des revendications 3 à 7, dans laquelle ledit polymère hydrosoluble à activité interfaciale est choisi parmi la polyvinylpyrrolidone, l'alcool polyvinylique hydrolysé à 87 % et la méthylcellulose, de préférence ledit polymère est choisi parmi la polyvinylpyrrolidone et l'alcool polyvinylique hydrolysé à 87 %.

9. Dispersion aqueuse de particules selon l'une quelconque des revendications 3 à 8, dans laquelle ladite particule à noyau solide comprend au moins l'un du polystyrène, de la silice, de l'hématite et de la goethite.

10. Dispersion aqueuse de particules selon la revendication 9, dans laquelle le polymère hydrosoluble à activité interfaciale est soit de l'alcool polyvinylique hydrolysé à 87 %, soit de la polyvinylpyrrolidone.

11. Dispersion aqueuse de particules selon la revendication 10, dans laquelle le polymère hydrosoluble à activité interfaciale a un poids moléculaire, tel que déterminé par le procédé de la description, supérieur ou égal à 55 kDa.

12. Procédé de formation d'un film particulaire homogène à partir de gouttelettes d'une dispersion aqueuse de particules selon l'une quelconque des revendications 3 à 11, le procédé comprenant :

- la fourniture d'une dispersion aqueuse de particules,
- la formation de gouttelettes de la dispersion aqueuse de particules,
- la mise en contact des gouttelettes avec une surface,
- le fait de laisser sécher les gouttelettes sur ladite surface ;

dans lequel la concentration en particules modifiées dans la dispersion est comprise entre 0,0001 et 5 % en poids, de préférence entre 0,0005 et 2,5 % en poids, de manière davantage préférée entre 0,001 et 1,0 % en poids par rapport au poids total de la dispersion aqueuse de particules.

13. Procédé selon la revendication 12, dans lequel la concentration en particules modifiées dans la dispersion est comprise entre 0,01 et 0,5 % en poids.

14. Film particulaire homogène obtenu à partir de gouttelettes d'une dispersion aqueuse de particules selon les revendications 3 à 11, comprenant, ou consistant en, des particules modifiées comprenant une particule à noyau solide et une enveloppe polymère externe, dans lequel l'enveloppe polymère comprend, ou consiste en, un polymère hydrosoluble à activité interfaciale, ayant un poids moléculaire supérieur à 10 kDa, dans lequel la couverture moyenne de la surface de substrat par des particules est sensiblement uniforme sur la totalité du film particulaire.

15. Utilisation d'une dispersion aqueuse de particules selon l'une quelconque des revendications 3 à 11 pour supprimer l'effet anneau de café, c'est-à-dire le transport par convection de particules jusqu'au bord, lors du processus de séchage de gouttelettes de ladite dispersion aqueuse de particules.

Fig. 1

Fig. 2

Fig. 3

Fig. 4

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DEEGAN, R. D et al.** *Nature,* 1997, vol. 389, 827-829
- **SEO, C. et al.** *Sci. Rep.,* 2017, vol. 7, 1-7
- **HU, H. et al.** *J. Phys. Chem. B,* 2006, vol. 110, 7090-7094
- **ANYFANTAKIS, M. et al.** *Langmuir,* 2015, vol. 31, 4113-4120
- **YUNKER, P. J. et al.** *Nature,* 2011, vol. 476, 308-311
- **PARK, J. et al.** *Langmuir,* 2006, vol. 22, 3506-3513
- **PERTOFT et al.** *Analytical Biochemistry,* 1978, vol. 88, 271
- **CHIBOWSKI, S.** *J. Colloid Interface Sci.,* 1990, vol. 134, 174-180
- **RAO, J. P et al.** *Prog. Polym. Sci.,* 2011, vol. 36, 887-913
- **HO, C. C. et al.** *Colloid Polym. Sci.,* 1993, vol. 271, 469-479
- **STÖBER, W. et al.** *J. Colloid Interface Sci.,* 1968, vol. 26, 62-69
- **PARK, J. H. et al.** *Macromol. Chem. Phys.,* 2007, vol. 208, 2419-2427